(19) Europäisches Patentamt / European Patent Office / Office européen des brevets

(11) **EP 2 981 355 B1**

(12) **FASCICULE DE BREVET EUROPEEN**

(45) Date de publication et mention de la délivrance du brevet:
**14.06.2017 Bulletin 2017/24**

(51) Int Cl.:
***B01J 23/745*** *(2006.01)*  ***B01J 23/89*** *(2006.01)*
***B01J 35/00*** *(2006.01)*  ***C10G 2/00*** *(2006.01)*

(21) Numéro de dépôt: **14722258.2**

(22) Date de dépôt: **02.04.2014**

(86) Numéro de dépôt international:
**PCT/FR2014/050786**

(87) Numéro de publication internationale:
**WO 2014/162099 (09.10.2014 Gazette 2014/41)**

(54) **PROCÉDÉ CHIMIQUE CATALYSÉ PAR DES NANOPARTICULES FERROMAGNÉTIQUES**

DURCH FERROMAGNETISCHE NANOTEILCHEN KATALYSIERTES CHEMISCHES VERFAHREN

CHEMICAL METHOD CATALYSED BY FERROMAGNETIC NANOPARTICLES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.04.2013 FR 1352961**

(43) Date de publication de la demande:
**10.02.2016 Bulletin 2016/06**

(73) Titulaires:
• **Institut National des Sciences Appliquées de Toulouse (INSAT)**
  **31077 Toulouse Cedex 14 (FR)**
• **Centre National de la Recherche Scientifique (C.N.R.S.)**
  **75794 Paris Cedex 16 (FR)**
• **Université Paul Sabatier Toulouse III**
  **31062 Toulouse Cedex 9 (FR)**

(72) Inventeurs:
• **CHAUDRET, Bruno**
  **F-31320 Vigoulet Auzil (FR)**
• **CARREY, Julian**
  **F-31400 Toulouse (FR)**
• **FAZZINI, Pier Francesco**
  **F-31200 Toulouse (FR)**
• **KELSEN, Vinciane**
  **F-31650 Saint Orens de Gameville (FR)**
• **LACHAIZE, Sébastien**
  **F-31350 Gensac de Boulogne (FR)**
• **MEFFRE, Anca**
  **F-31700 Blagnac (FR)**
• **MEHDAOUI, Boubker**
  **20230 Casablanca (MA)**
• **RESPAUD, Marc**
  **F-31560 Calmont (FR)**

(74) Mandataire: **Ipside**
**6, Impasse Michel Labrousse**
**31100 Toulouse (FR)**

(56) Documents cités:
• **VINCIANE KELSEN ET AL: "The use of ultrasmall iron(0) nanoparticles as catalysts for the selective hydrogenation of unsaturated C-C bonds", CHEMICAL COMMUNICATIONS, vol. 49, no. 33, 1 janvier 2013 (2013-01-01), page 3416, XP055088989, ISSN: 1359-7345, DOI: 10.1039/c3cc00152k**
• **SASCHA CEYLAN ET AL: "Inductive Heating for Organic Synthesis by Using Functionalized Magnetic Nanoparticles Inside Microreactors", ANGEWANDTE CHEMIE INTERNATIONAL EDITION, vol. 47, no. 46, 3 novembre 2008 (2008-11-03), pages 8950-8953, XP055089006, ISSN: 1433-7851, DOI: 10.1002/anie.200801474**
• **THOMAS K. HOULDING ET AL: "Application of alternative energy forms in catalytic reactor engineering", GREEN PROCESSING AND SYNTHESIS, vol. 1, no. 1, 1 janvier 2012 (2012-01-01) , XP055089039, ISSN: 2191-9542, DOI: 10.1515/greenps-2011-0502**

**Description**

La présente invention appartient au domaine des procédés de catalyse hétérogène et plus particulièrement des procédés de transformations chimiques catalysées par des nanoparticules métalliques.

Elle a pour objet un procédé de catalyse hétérogène d'une réaction chimique où un réactif est mis en contact avec une composition catalytique comprenant des nanoparticules alliant des propriétés magnétiques et catalytiques, aptes à catalyser une réaction chimique lorsqu'elles sont chauffées par un champ magnétique, composition catalytique qui est chauffée par induction magnétique pour atteindre la température voulue.

Les travaux menant à la présente invention ont bénéficié d'un soutien financier du septième programme-cadre de la Communauté européenne (7ème PC/2007-2013) en vertu de la convention de subvention n° ERC 246763.

On sait que près de 80 % des procédés que l'industrie chimique a mis en oeuvre font appel à la catalyse hétérogène. Par exemple, la transformation du charbon ou du gaz naturel en produits à plus haute valeur ajoutée nécessite l'utilisation de catalyseurs. L'industrie du raffinage n'aurait pas connu l'essor actuel sans la découverte de catalyseurs de craquage des hydrocarbures pour la production d'essences. Une meilleure formulation et une meilleure composition des essences (meilleur indice d'octane) ont été rendues possibles à la suite du développement de catalyseurs d'isomérisation et d'aromatisation des paraffines. Les procédés catalytiques ainsi développés dans l'industrie du raffinage ont eu un impact considérable, tant sur l'économie que sur la meilleure utilisation des matières premières. Un autre exemple de la dynamique générée par la catalyse dans notre société, est fourni par la préparation industrielle de l'ammoniac à partir de l'azote de l'air et de l'hydrogène, catalysée par des composés minéraux tels que le fer, qui a eu des effets considérables sur l'agriculture en contribuant au développement d'engrais minéraux.

En augmentant substantiellement la vitesse des transformations chimiques et en améliorant la sélectivité de la réaction vers le produit recherché, les procédés catalytiques ont permis d'accroître considérablement la capacité de production des unités industrielles et de diminuer les dimensions des unités de production. Cependant, ces réactions qui se déroulent à haute température, consomment de grandes quantités d'énergie.

De nos jours, les recherches se poursuivent pour améliorer encore l'efficacité des procédés industriels de catalyse hétérogène, et ce dans un contexte qui impose de nouvelles contraintes dictées par les facteurs économiques et des dispositions législatives visant notamment à la sécurité des installations et au respect des normes environnementales. Parmi ces contraintes, on citera la moindre utilisation d'énergie, la valorisation ou l'emploi de produits secondaires, le choix des matières premières, le contrôle de la pollution.

Les douze principes de la Chimie Verte qui font écho à la prise de conscience des chercheurs, et plus largement de la société civile, de la nécessité de préserver notre planète, recommandent de préférer les procédés catalytiques aux procédés stoechiométriques, avec la recherche de nouveaux réactifs plus efficaces et plus sûrs. Doivent également être encouragés les procédés ayant un impact énergétique réduit. Il convient donc de rechercher des procédés à faible consommation d'énergie : procédés autothermiques, fonctionnant à basses pressions et/ou à faibles températures.

Le choix d'un catalyseur plus performant peut constituer une solution. On peut citer dans le domaine de la catalyse homogène l'exemple de l'hydroformylation, où le remplacement des complexes du cobalt par des complexes du rhodium a amené une diminution de la pression et de la température de réaction, amélioré la sélectivité et supprimé le cycle de retraitement du catalyseur. Cependant, les gains énergétiques restent modérés, car les températures de réaction en catalyse homogène sont modérées, de l'ordre de 100°C à 150°C en présence d'un solvant. Surtout, la solution proposée ne peut pas être généralisée à d'autres réactions. Elle ne convient pas en particulier aux réactions avec les composés gazeux, tels que les oxydes de carbone.

Il n'en reste pas moins que la plupart des procédés chimiques de catalyse, nécessitent un apport d'énergie conséquent, et ce pour plusieurs raisons. La première est que les réactions se produisent à des températures élevées, dans un intervalle de l'ordre de 300°C à 500°C en ce qui concerne les réactions de catalyse hétérogène. La montée en température des réacteurs doit être progressive, sous peine de provoquer la dégradation du catalyseur, par agrégation, fusion de particules, ou calcination. En outre, compte tenu des différentes contraintes industrielles, ces réactions nécessitent des unités de transformation de taille importante, dont la mise en route est longue, et dont le maintien en température est fortement consommateur d'énergie.

La publication de Kelsen et al., dans Chemical Communications, 2013, 49, 3416, décrit un procédé de catalyse liquide-solide de réactions d'hydrogénation mettant en oeuvre en tant que catalyseur des nanoparticules de fer ultrafines, de taille inférieure à 1,5 nm, et un chauffage du milieu réactionnel en autoclave.

La publication de Ceylan et al., dans Angewandte Chemie International Edition, 2008, 47, 8950, décrit un procédé de catalyse liquide-solide dans lequel des nanoparticules d'oxyde de fer sont utilisées pour produire de la chaleur par application d'un champ électromagnétique.

La publication de Houlding et al., dans Green Processing and Synthesis, 2012, 19-31, décrit la possibilité de mettre en oeuvre une combinaison de nanoparticules catalytiques et de nanoparticules présentant une fonction thermique par chauffage par induction magnétique, disposées à proximité les unes des autres sur un même support, pour une réaction de catalyse en phase liquide.

Il serait intéressant de mettre au point un procédé de portée générale, qui permette de réduire fortement les quantités d'énergie nécessaires à une réaction déterminée. Idéalement, un tel procédé et son mode opératoire devraient être applicables à de nombreuses réactions catalytiques, voire à la plupart d'entre elles.

Pour répondre à cet objectif, les inventeurs ont recherché un moyen d'obtenir un chauffage d'un milieu réactionnel, rapide mais suffisant pour réaliser la réaction catalytique. La solution innovante repose sur l'emploi de catalyseurs ferromagnétiques, pouvant être chauffés par induction magnétique à partir d'un inducteur de champ externe au réacteur. Dans ce système, une nanoparticule catalytique est chauffée par son propre moment magnétique. Seul le catalyseur est chauffé. Sous l'effet du champ magnétique, sa température monte rapidement de sorte que la réaction de catalyse démarre à sa surface, sans que le milieu réactionnel dans son ensemble ait atteint la température critique de réaction. On peut ainsi atteindre de très hautes températures locales. Dans le cadre de la présente invention et de manière originale, sont utilisés des matériaux catalytiques réalisant un couplage des propriétés physiques et des propriétés chimiques, à savoir qu'ils peuvent à la fois jouer le rôle de catalyseur d'une réaction donnée, et être stimulés pour fournir l'énergie thermique nécessaire à ladite réaction. Il s'agit de nanoparticules ayant à la fois une action catalytique dans une ou plusieurs réactions chimiques, et des propriétés ferromagnétiques, de sorte qu'elles réagissent par un échauffement local et ponctuel lorsqu'on leur applique un champ alternatif de radiofréquences, en provoquant la réaction catalytique des réactifs se trouvant à leur contact.

Les nanoparticules magnétiques (NPMs) sont connues pour avoir des propriétés intéressantes qui trouvent des applications dans différents domaines tels que les aimants permanents, la micro- et la nano-électronique, la catalyse "verte" ou la biomédecine. Le traitement des cancers par hyperthermie magnétique est particulièrement prometteur : des NPMs sont injectées dans la tumeur, puis le patient est plongé dans un champ magnétique de fréquence et d'amplitude choisie. Du fait de l'excitation des NPMs, la température de la tumeur augmente, améliorant les effets de la chimiothérapie (pour des température de 42-45°C), ou même conduisant à la nécrose de la tumeur (T°>50°C).

De nombreuses études visent à optimiser les traitements médicaux par hyperthermie. En effet, la recherche de NPMs présentant des propriétés optimales dans ce domaine exigeant et la mise au point des conditions de leur synthèse est très active (Optimal size of nanoparticles for magnetic hyperthermia: A combined theoretical and experimental study. B. Mehdaoui, A. Meffre, J. Carrey, S. Lachaize, L. M. Lacroix, M. Gougeon, B. Chaudret, and M. Respaud, Adv Funct Mat 2011, 21, 4573 - Alternative and Robust Synthesis of Monodisperse Iron(0) Nanoparticles With High Magnetization:

Anca Meffre, Sébastien Lachaize, Christophe Gatel, Marc Respaud and Bruno Chaudret, J Mat Chem 2011, 21, 13464 - A simple chemical route toward monodisperse iron carbide nanoparticles displaying tunable magnetic and unprecedented hyperthermia properties: Anca Meffre, Boubker Mehdaoui, Vinciane Kelsen, Pier Francesco Fazzini, Julian Carrey, Sebastien Lachaize, Marc Respaud, Bruno Chaudret, NanoLetters, 2012).

Toutefois, compte tenu de la spécificité du domaine médical, les résultats obtenus sont difficilement transposables à un environnement tel que celui de la catalyse chimique. De fait, les températures mises en jeu sont différentes, puisque pour préserver les tissus biologiques, il est impératif de travailler à des températures maximales de 50°C à 60°C, avec des durées courtes, alors que les conditions catalytiques vont imposer des valeurs généralement supérieures à 300°C et des conditions opératoires souvent agressives.

En outre, si l'hyperthermie (ce terme étant jusqu'à présent réservé aux applications thérapeutiques) met en oeuvre des nanoparticules dotées de propriétés magnétiques, parfois associées à des propriétés optiques pour aider à leur repérage dans l'organisme, ces nanoparticules sont inertes vis-à-vis de leur milieu et ne jouent pas de rôle catalytique. Ce ne sont donc pas les mêmes nanoparticules qui peuvent être utilisées dans les deux cas.

De manière inattendue, il est apparu qu'une réaction catalysée par une NPM dont la surface comprend un catalyseur de ladite réaction, pouvait démarrer en moins d'une seconde lorsqu'un champ magnétique est appliqué, et qu'elle se poursuivait avec un apport d'énergie minimal, jusqu'à une conversion pouvant être totale. Une conséquence particulièrement intéressante de la montée en température quasiment instantanée, est que la réaction peut être plus facilement contrôlée. Elle peut être mise en oeuvre avec une grande souplesse, sur des réacteurs de petite taille. Sa mise en route étant rapide, elle peut être stoppée et relancée sans grands inconvénients (économiques ou techniques). Elle peut aisément être stimulée de manière intermittente, ce qui est un avantage lorsqu'on souhaite éviter l'emballement d'une réaction exothermique, et ce d'autant que la montée en température étant localisée au niveau du catalyseur, le volume réactionnel n'est pas aussi chaud que le catalyseur et présente donc une inertie thermique moindre que dans un système classique.

C'est aussi un avantage notable lorsqu'un substrat de la réaction est fourni de manière séquentielle ou irrégulière au réacteur. C'est le cas par exemple de l'hydrogène produit à partir de l'énergie photovoltaïque ou éolienne. Une spécificité de ce type d'énergie, est que sa production est obtenue par une multitude de sources dispersées, de puissance faible ou modérée, fonctionnant de manière intermittente. Il est donc crucial de pouvoir la stocker sous une forme facilement transportable et transformable, afin d'en disposer de manière régulière.

Un procédé bien connu de stockage de l'énergie est la réduction catalytique des oxydes de carbone en hydrocarbures : en présence d'hydrogène, le dioxyde de carbone ($CO_2$) est transformé en méthane (réaction de Sabatier) et le monoxyde de carbone (CO) en hydrocarbures supérieurs (procédé Fischer-Tropsch). Les catalyseurs sont ici des métaux tels que le fer, le cobalt, le nickel ou des alliages de ces métaux. L'intérêt de ces procédés chimiques est de produire du méthane ou un mélange d'hydrocarbures qui peut ensuite être hydrocraqué (hydroisomérisé) pour fournir du carburant liquide synthétique.

Or, actuellement, la conversion chimique des oxydes de carbone nécessite des unités de transformation de taille importante qui ont une inertie élevée car le temps de mise en chauffe des installations est long. Ceci exclut leur alimentation par des sources d'énergie intermittentes et de faible puissance.

La présente invention apporte donc une réponse particulièrement intéressante à ces défis en proposant un procédé de catalyse hétérogène gaz-solide qui permet l'hydrogénation des oxydes de carbone à l'aide de nanoparticules ferromagnétiques et catalytiques.

Ce procédé permet ainsi de convertir le dihydrogène en une autre forme chimique, et de ce fait, de transformer l'énergie électrique produite localement en des composés énergétiques, tels que des hydrocarbures, directement utilisables dans des systèmes thermiques. Il est adapté aux impératifs industriels, car il peut être réalisé dans des unités de petite taille au fonctionnement modulable, et avantageusement de manière décentralisée.

Est ainsi proposé un procédé pour la réalisation d'une réaction en catalytique hétérogène, mettant en oeuvre une composition catalytique comprenant des NP dotées à la fois de propriétés catalytiques et magnétiques. Plus précisément, l'invention a pour objet un procédé de catalyse hétérogène gaz-solide d'une réaction chimique de conversion d'un oxyde de carbone selon la revendication 1.

Ce procédé peut répondre à l'une ou plusieurs des caractéristiques de l'une quelconque des revendications 2 à 12.

Les nanoparticules mises en oeuvre dans le procédé objet de l'invention sont donc des entités dotées à la fois de propriétés ferromagnétiques et catalytiques. Elles peuvent constituer à elles seuls la composition catalytique, ou en former seulement une fraction.

Sous le vocable d'inducteur, on désigne globalement un système d'induction magnétique comprenant des organes générant le champ magnétique, des organes permettant de contrôler les valeurs de ce champ, ainsi que l'alimentation électrique ou autre, que l'homme du métier sait choisir et calibrer au regard du cahier des spécifications données, et qui sera précisé plus loin. L'inducteur est agencé de manière à ce que le mélange réactionnel, et singulièrement la composition catalytique, soit soumis au champ magnétique quand il est mis en route. Le champ magnétique peut par exemple être généré à partir d'un dispositif placé dans le réacteur, dans sa paroi, ou encore à l'extérieur de celui-ci. Ce dernier mode de réalisation sera préféré car l'inducteur est ainsi découplé de l'environnement chimique potentiellement agressif. En outre, dans ce cas l'inducteur peut être plus aisément piloté. Ainsi, dans le procédé selon l'invention, le composant nanoparticulaire peut être chauffé par induction magnétique à l'aide d'un inducteur de champ externe au réacteur.

La génération de champs magnétiques à haute fréquence est relativement coûteuse énergétiquement puisque la puissance nécessaire augmente avec le carré du champ appliqué. Par contre, la chaleur dissipée par des particules optimisées augmente linéairement avec la valeur du champ. On préférera travailler à des faibles valeurs de champ magnétique pour un meilleur rendement énergétique. C'est pourquoi, selon une caractéristique avantageuse du procédé selon l'invention, le champ magnétique généré a une amplitude comprise entre 1 mT et 100 mT (ce qui correspond à de faibles valeurs du champs), et une fréquence comprise entre 20 kHz et 400 kHz. On peut travailler à des valeurs plus faibles encore, avec un champ magnétique d'amplitude pouvant aller de 20 mT à 80 mT, et une fréquence de 50 kHz à 300 kHz.

La composition catalytique comprend un composant nanoparticulaire ferromagnétique et catalytique. Le composant nanoparticulaire ferromagnétique peut être doté par lui-même de propriétés catalytiques vis-à-vis des réactifs en jeu. Dans ce cas, selon une variante du procédé objet de l'invention, ledit composant nanoparticulaire est constitué d'au moins un composé métallique ferromagnétique qui est aussi un catalyseur de ladite réaction.

On peut utiliser aussi dans la composition catalytique, des nanoparticules ferromagnétiques qui ne sont pas des catalyseurs de la réaction concernée. Il convient alors qu'un composé catalyseur soit associé à des nanoparticules ferromagnétiques, ce composé étant bien évidemment dans ce cas différent du matériau magnétique. Ainsi, dans une variante alternative du procédé objet de l'invention, ledit composé métallique ferromagnétique formant un noyau, est associé à un métal catalytique de ladite réaction. Le métal catalytique peut simplement recouvrir (au moins en partie) le matériau ferromagnétique. Il peut aussi être additionné aux particules de matériau magnétique de sorte à former un alliage homogène avec le métal magnétique de base. On dispose alors d'une entité homogène ou ségrégée contenant les deux éléments, dotée de la double propriété d'être ferromagnétique et catalytique de ladite réaction. Pour la simplicité de la description, on parlera par la suite de noyau et de surface recouverte, bien que pour certaines des particules selon l'invention, cette distinction soit plus fonctionnelle que physique.

Un objectif de l'invention étant d'économiser l'énergie, il est souhaité que les nanoparticules utilisées aient une puissance de chauffe optimisée, c'est-à-dire que leur montée en température soit maximale pour un champ magnétique donné (et donc aussi leur efficacité énergétique). C'est le cas lorsque l'anisotropie du matériau répond à la relation suivante entre l'anisotropie du matériau, son aimantation, et le champ magnétique appliqué :

$$K = 1.69 \frac{\mu_0 H_{ac} M_S}{2},$$

où K est l'anisotropie du matériau, $M_s$ l'aimantation et $\mu_0 H_{ac}$ le champ alternatif appliqué. *(Simple models for dynamic hysteresis loop calculations of magnetic single-domain nanoparticles: Application to magnetic hyperthermia optimization - J. Carrey, B. Mehdaoui and M. Respaud J. Appl. Phys. 109, 083921 (2011)).* Travailler avec des faibles champs magnétiques implique donc d'utiliser des nanoparticules à faible anisotropie.

C'est pourquoi, pour un champ magnétique donné, dont l'amplitude peut aller de 20 mT à 80 mT - avantageuse pour l'application industrielle visée - il est préférable de travailler avec des matériaux dont l'anisotropie est inférieure à $8 \times 10^4$ J/m$^3$, et dans l'idéal inférieure à $3 \times 10^4$ J/m$^3$. Les matériaux rentrant dans cette catégorie sont par exemple Fe, FeCo, les oxydes de fer (magnétite, maghémite), le nickel, le permalloy, les ferrites douces, les carbures, des matériaux magnétiques amorphisés, etc... Ainsi, selon une caractéristique préférée du procédé objet de l'invention, ledit composé métallique ferromagnétique est choisi parmi ceux qui ont une anisotropie magnétique inférieure à $8.10^4$ J. m$^{-3}$, et encore de préférence inférieure à $3.10^4$ J.m$^{-3}$.

Toujours du point de vue de la puissance de chauffe et selon l'invention, il est avantageux d'optimiser aussi un autre paramètre, à savoir la taille des nanoparticules, communément définie par leur diamètre. Elle doit être la plus grande possible, du moins tant que les nanoparticules restent monodomaines, c'est-à-dire d'une taille inférieure à la taille critique de transition entre état monodomaine et état multidomaine. La transition vers un état multidomaine pour les grosses particules s'accompagne en effet d'une chute de leur puissance de chauffe (Optimal size of nanoparticles for magnetic hyperthermia: A combined theoretical and experimental study - B. Mehdaoui, A. Meffre, J. Carrey, S. Lachaize, L. M. Lacroix, M. Gougeon, B. Chaudret, and M. Respaud - Adv. Func. Mater. 21, 4573 (2011)).

Bien que cette taille optimale soit difficile à prédire exactement, les inventeurs ont pu établir qu'elle doit être proportionnelle à $\sqrt{\dfrac{T_c}{K}}$, où K est l'anisotropie du matériau et $T_c$ est la température de Curie du matériau. Elle a été trouvée expérimentalement aux environs de 20 nm dans le cas du fer (B. Mehdaoui, *ibid.*). En utilisant les valeurs de K et $T_c$ du fer, on a déduit que le diamètre optimal D en nanomètres est d'environ :

$$D = 135 \sqrt{\frac{T_C}{K}}$$ , avec $T_c$ en Kelvins et K en Jm$^{-3}$. C'est pourquoi, de manière préférée, pour maximiser la puissance de chauffe dans le procédé selon l'invention, la taille dudit composant nanoparticulaire ferromagnétique est telle que son diamètre D exprimé en nanomètres est défini, par la relation :

$$D = N \sqrt{\frac{T_C}{K}}$$

où N est tel que $80 \leq N \leq 200$, et $T_c$ est la température de Curie du matériau ferromagnétique dudit composant nanoparticulaire en Kelvins, et K est son anisotropie magnétique en Jm$^{-3}$. Encore de préférence, la valeur de N est telle que $110 \leq N \leq 160$.

Il est précisé que le diamètre D est défini en toute rigueur comme se rapportant à la taille de la partie magnétique de la particule (la nanoparticule entière ou le coeur seul, selon le cas). En pratique, le fait de recouvrir le coeur d'un autre matériau ne change pas significativement les données dans la mesure où n'y a pas de réaction chimique entre le catalyseur et le coeur qui modifie le magnétisme de surface de la particule. Ceci est d'autant plus vrai que les particules de taille optimale sont en général relativement grosses, de sorte qu'une éventuelle modification du magnétisme de surface n'a pas d'influence sensible sur la particule dans son ensemble. Finalement, on utilisera de manière avantageuse dans le procédé selon l'invention, un composant nanoparticulaire ferromagnétique dont la taille est comprise entre 5 nm et 50 nm.

Selon une caractéristique particulière du procédé objet de l'invention, lorsque ledit au moins un composé métallique est à la fois ferromagnétique et catalyseur, on peut le choisir parmi le fer, les carbures et les alliages de ce métal. On peut choisir par exemple les matériaux suivants, qui ont une anisotropie inférieure à $8 \times 10^4$ J.m$^{-3}$ : Fe, FeCo, les carbure amorphes, les alliages Fe/Cx, par exemple $Fe_3C$, $Fe_5C_2$. On peut citer également les alliages de NiFe (par exemple le permalloy), ou encore des matériaux ferromagnétiques amorphisés, etc....

Selon une caractéristique alternative du procédé objet de l'invention, lorsque ledit au moins un composé métallique ferromagnétique forme un noyau recouvert d'un métal catalytique, le composé métallique ferromagnétique peut être choisi parmi le fer, les carbures de fer ; et ledit métal catalytique le recouvrant en totalité ou en partie, peut être choisi parmi le ruthénium, le manganèse, le cobalt, le nickel, le cuivre, le zinc. De préférence, on utilisera le ruthénium ou le cobalt pour leurs excellentes propriétés catalytiques.

On note qu'il n'y a pas d'obligation que le métal catalytique recouvre le composé ferromagnétique en totalité dans la mesure où aucune protection particulière du matériau ferromagnétique vis-à-vis du milieu réactionnel (ou inversement) n'est recherchée, ni nécessaire. Peu importe donc qu'on ait une couverture complète ou partielle.

Conformément à la présente invention, le procédé est mis en oeuvre dans un réacteur qui est fabriqué en des matériaux non ferromagnétiques. On pourra notamment utiliser le verre, le silicium, des matériaux polymères, tels qu'un polycarbonate, un polyester ou un polytétrafluoroéthylène (PTFE, connu sous le nom commercial de Téflon).

Le procédé qui vient d'être décrit repose sur le principe de l'utilisation d'un chauffage par induction pour chauffer des catalyseurs à base de métaux ferromagnétiques pour des transformations très variées. Dans le cas où les catalyseurs ne sont pas eux-mêmes feromagnétiques, ils peuvent être supportés sur des nanoparticules de carbures de fer, de fer-cobalt ou autre. Il a une portée très large, car il peut être réalisé pour de nombreuses réactions catalytiques conventionnelles faisant l'objet d'une exploitation industrielle à grande échelle, par exemple dans le domaine de la chimie fine. Sa mise en oeuvre ne nécessite qu'un générateur de champ magnétique alternatif, dispositif peu cher, et des installations en verre ou polymères. L'ensemble peut être mis en oeuvre très simplement à un coût réduit.

Le procédé permet d'atteindre localement des températures très élevées dans des solutions par ailleurs non chauffées. De ce fait, il est particulièrement adapté pour des réactions de conversion de la biomasse de deuxème génération (conversion des résidus lignocellulosiques). L'utilisation de fer rend le procédé totalement "vert".

Le procédé selon l'invention peut s'appliquer à tout type de réaction chimique, utilisant un catalyseur solide et des réactifs à l'état gazeux. Il est particulièrement intéressant pour réaliser la transformation de composés gazeux (catalyse hétérogène gaz-solide), telle qu'une réaction de synthèse d'un hydrocarbure (ou composé organique hydrogéné). Il peut s'agir par exemple d'une réaction de Sabatier, d'une synthèse Fischer-Torpsch, d'une réaction de méthanisation, de la synthèse de méthanol ou d'alcool supérieurs. Plus particulièrement, le procédé selon l'invention peut être appliqué de manière avantageuse à une réaction d'hydrogénation d'un oxyde de carbone à l'état gazeux (CO, $CO_2$) catalysée par des nanoparticules ferromagnétiques et catalytiques chauffées par induction magnétique.

Les compositions catalytiques permettant de réaliser les procédés qui viennent d'être décrits contiennent des composés nanoparticulaires possédant la double particularité d'être ferromagnétiques et catalyseurs d'une réaction d'intérêt. On a ainsi un couplage sur un même matériau de propriétés physiques (magnétisme) et chimiques (catalyses). Il en découle des fonctionnalités complémentaires, qui sont mises à profit ici de manière originale, dans une application totalement nouvelle.

Pour être aptes à une mise en oeuvre dans ces procédés innovants, les composés nanoparticulaires doivent répondre à un certain nombre de critères. En particulier, il faut contrôler la synthèse de nanoparticules ferromagnétiques pour leur conférer les caractéristiques recherchées en terme de vitesse et de puissance de chauffe ainsi que de réactivité, afin d'obtenir l'effet catalytique voulu.

Comme expliqué plus haut en détail, l'aptitude à atteindre les températures mises en oeuvre en catalyse hétérogène implique que les nanoparticules restent monodomaines, c'est-à-dire d'une taille inférieure à la taille critique de transition entre état monodomaine et état multidomaine. La transition vers un état multidomaine pour les grosses particules s'accompagne en effet d'une chute de leur puissance de chauffe.

Selon l'invention, on peut préparer des nanoparticules à partir de matériaux présentant par eux-mêmes la double propriété magnétique et catalytique vis-à-vis de réactifs donnés. Dans ce cas, on peut préparer une composition dont le composant nanoparticulaire est de structure uniforme. Ainsi, dans un mode de réalisation intéressant de la composition catalytique pour mise en oeuvre selon l'invention, le composant nanoparticulaire est constitué d'au moins un composé métallique ferromagnétique qui est aussi un catalyseur de ladite réaction.

On peut aussi préparer les nanoparticules à partir de matériaux ne présentant qu'une des propriétés requises. Dans ce cas, on choisira d'associer deux matériaux (au moins) de sorte que l'un deux, possédant les propriétés catalytiques recherchées soit en périphérie des nanoparticules, au contact des réactifs, tandis qu'un autre, constituant un noyau (qui peut être ou non en contact avec les réactifs), apporte ses caractéristiques ferromagnétiques. C'est pourquoi, dans un autre mode de réalisation intéressant de la composition pour mise en oeuvre selon l'invention, le composant nanoparticulaire est constitué d'au moins un composé métallique ferromagnétique tel que défini dans la revendication 1 formant un noyau, qui est associé à un métal catalytique de ladite réaction. Cette variante suppose que le matériau de surface est différent de celui du noyau. Les nanoparticules sont alors structurées. Comme indiqué plus haut, l'association des deux matériaux peut être une addition en surface qui est alors recouverte au moins en partie par le métal catalytique (matériaux ségrégés), ou bien par un alliage homogène.

A noter que lorsque l'activité catalytique du matériau présent en surface du composé nanoparticulaire est jugée insuffisante, il est possible de la renforcer efficacement par dopage avec un autre métal catalytique. Ce dopage de surface peut être utilisé dans les deux variantes ci-dessus. Pour les nanoparticules structurées, plus de deux matériaux peuvent donc être utilisés. Par exemple, on peut recourir à un matériau de surface constitué d'un premier métal aux propriétés catalytique plus ou moins prononcées, dopé par un second métal catalytique (tel que notamment le ruthénium ou le cobalt).

Quoi qu'il en soit, et quels que soient les matériaux catalytiques choisis, on prendra soin de sélectionner de préférence ceux pour lesquels la température atteinte dans la réaction cible est optimale. On a vu que pour que la montée en température soit maximale (et donc aussi efficacité énergétique), anisotropie des particules doit être faible. Ceci est valable pour un champ magnétique donné, sachant que l'on souhaite qu'il soit lui-même aussi faible que possible. C'est pourquoi, on choisira un composé métallique ferromagnétique ayant une anisotropie magnétique inférieure à $8.10^4$ J. m$^{-3}$. De préférence encore, l'anisotropie du matériau sera inférieure à $3.10^4$ J. m$^{-3}$.

On a vu aussi que la température que les nanoparticules sont susceptibles d'atteindre dépend également de leur taille. On aura donc tout intérêt dans le cadre de l'invention, à ce que la taille des particules, définie par leur diamètre, se rapproche d'une valeur optimale en relation avec leur aimantation, et le champ magnétique appliqué. Ainsi, selon une autre caractéristique préférée de la composition pour mise en oeuvre selon l'invention, la taille dudit composant nanoparticulaire ferromagnétique est telle que son diamètre D exprimé en nanomètres, est défini par la relation :

$$D = N\sqrt{\frac{T_C}{K}}$$

où N est tel que : $80 \leq N \leq 200$, et de préférence $110 \leq N \leq 160$,
et $T_c$ est la température de Curie du matériau ferromagnétique dudit composant nanoparticulaire en Kelvins, et K est son anisotropie magnétique en J.m$^{-3}$.

Ainsi, dans la composition pour mise en oeuvre selon l'invention et compte tenu des caractéristiques préférées ci-avant exposées, la taille du composant nanoparticulaire ferromagnétique sera comprise entre 5 nm et 50 nm.

La présente invention sera mieux comprise, et des détails en relevant apparaîtront, grâce à la description qui va être faite de variantes de réalisation, en relation avec les figures annexées, dans lesquelles :

La Fig.1 est un schéma simplifié d'un réacteur de catalyse selon l'invention
La Fig. 2 présente des nanoparticules de fer selon l'invention vue en microscopie par transmission d'électrons (Fig 2a) et diffraction de rayons X (Fig 2b).
La Fig. 3 est le spectre de masse des produits d'une réaction de Fischer-Tropsch catalysée par des nanoparticules de fer selon l'invention.
La Fig. 4 est le spectre de masse des produits d'une réaction d'activation de CO par $H_2$ catalysée par des nanoparticules de Fe/FeC/Ru selon l'invention.
Les Fig. 5 et 6 sont les spectres de masse des produits obtenus après une seconde et une troisième réaction d'activation de CO par $H_2$, catalysées par les mêmes nanoparticules de Fe/FeC/Ru.
La Fig. 7 est le spectre de masse des produits d'une réaction d'activation de $CO_2$ par $H_2$ catalysée par des nanoparticules de Fe/FeC/Ru selon l'invention.

**EXEMPLE 1 : Réacteur pour procédé de catalyse hétérogène gaz-solide**

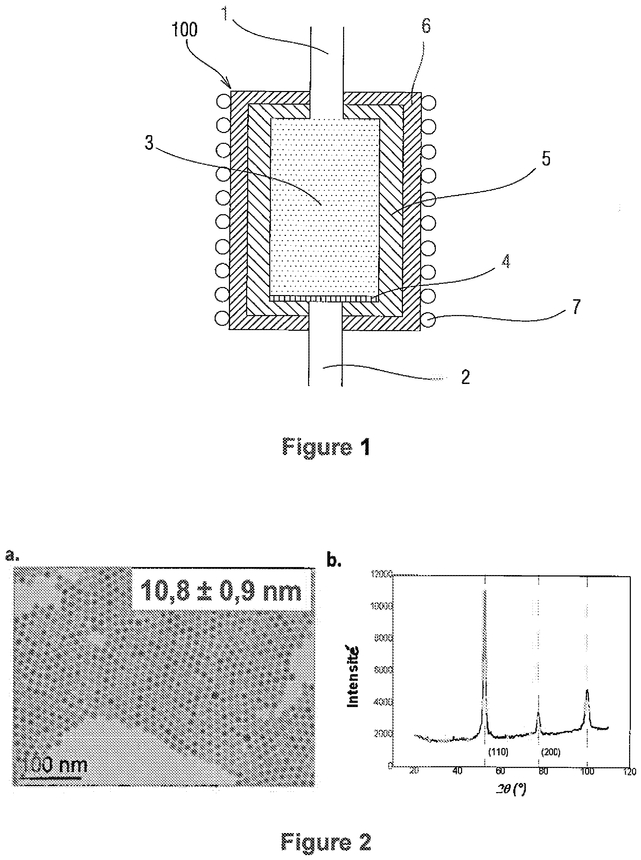

Le procédé de catalyse d'une réaction chimique selon l'invention peut être réalisé dans un four en mettant en oeuvre au moins un réactif gazeux, et une composition catalytique selon l'invention. Le four présenté à la figure 1 comporte une enceinte (100), comprenant une entrée (1) des gaz réactifs et une sortie (2) des gaz produits. L'enceinte comprend une paroi interne (5) constituée d'un matériau inerte chimiquement, non magnétique et résistant à la pression, de préférence isolant électrique (verre, céramique, matière plastique), et de préférence aussi une paroi externe (6) thermiquement isolante. L'enceinte est munie d'un système de génération d'un champ électrique tel qu'une bobine (7), ou un électroaimant.

La composition ferromagnétique catalytique choisie (3) est introduite dans l'enceinte. Elle est retenue en sortie par la grille (4) permettant le passage des gaz, mais pas les nanoparticules la composant.

**EXEMPLE 2 : Synthèse d'un catalyseur nanoparticulaire Fe(0)**

Une bouteille Fischer-Porter en verre a été utilisée en tant que réacteur. Elle est chargée en boite à gant avec une solution de 376,5 mg (1 mmol) de dimère de complexe de fer {Fe[N(SiMe$_3$)$_2$]$_2$}$_2$ dans 20 ml de mésitylène. A cette solution, sont ajoutés 415,5 mg (soit 1,5 mmol) de HDAHCl (chlorure d'hexadécyl ammonium), puis on homogénéise la solution pendant 5 minutes à température ambiante. La couleur change du vert clair au jaune foncé et ensuite au marron. Après homogénéisation, on ajoute 483,0 mg (2 mmol) de HDA (hexadécylamine). Le milieu réactionnel ainsi formé est chauffé à 150°C pendant 2 jours. La poudre noire formée est récupérée par décantation magnétique et lavée 5 fois avec du toluène (5x15 ml). La microscopie par transmission d'électrons (TEM) corrélée à la diffraction de rayons X, montre la formation de nanoparticules purement métalliques de Fe(0), de forme plutôt cubique (présentées à la figure 2).

La température de Curie du matériau est Tc = 1043 K. L'anisotropie des nanoparticules de fer est estimée à K = $7x10^4$ J/m$^3$, avec N = 88,5, le diamètre, D = 10,8 nm avec un écart type 0,9 nm.

**EXEMPLE 3 : Catalyse Fischer-Tropsch par nanoparticules de Fe(0)**

Une bouteille Fischer-Porter est chargée sous atmosphère d'Argon avec environ 10 mg de nanoparticules de Fe(0) obtenues à l'exemple 2. Après avoir effectué le vide dans la bouteille, celle-ci est pressurisée à température ambiante avec une quantité équivalente de CO et de $H_2$ amenant la pression du système à 1,85 bar de gaz. La pression du système est contrôlée à l'aide d'un manomètre placé sur la tête de la bouteille Fisher-Porter. Le corps de la bouteille est ensuite placé à l'intérieur d'une bobine qui génère un champ magnétique alternatif de fréquence 60 kHz et d'amplitude 56 mT (28 A) pendant une durée de 2 x 30 min (et un temps de pause entre les deux de 10 min). La montée de la température est rapide.

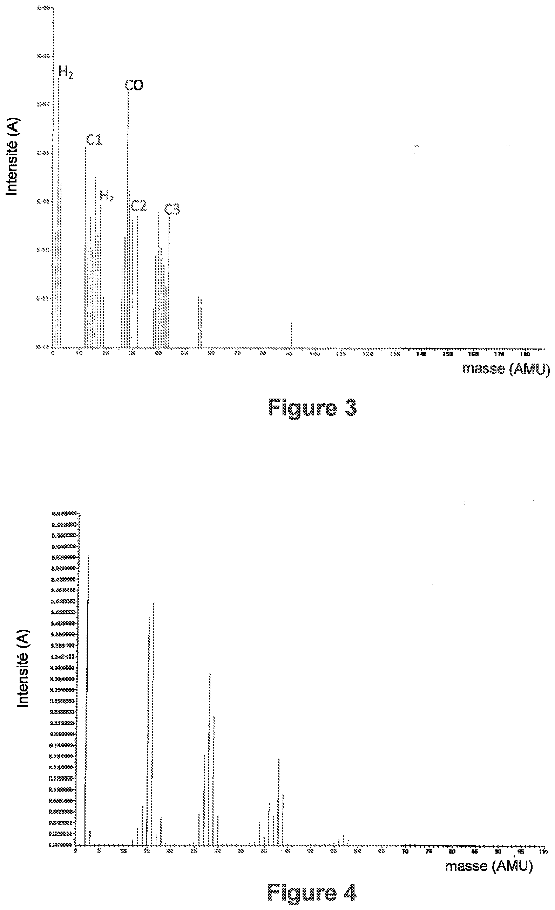

En fin de réaction, le gaz contenu dans la bouteille est analysé par spectrométrie de masse. La conversion du gaz ajouté est totale. L'analyse du spectre montre la présence d'hydrocarbures allant de C1 à C3, du CO et de l'$H_2$ résiduels et la présence d'eau (voir Figure 3).

## EXEMPLE 4 : Synthèse de catalyseurs nanoparticulaires de Fe/FeC/Ru

Une bouteille Fischer-Porter en verre a été utilisée en tant que réacteur. Elle est chargée en boite à gant avec une solution de 376,5 mg (1 mmol) de dimer de complexe de fer {Fe[N(SiMe$_3$)$_2$]$_2$}$_2$ dans 20 ml de mésitylène. A cette solution, on ajoute 415,5 mg (soit 1,5 mmol) de HDAHCl (chlorure d'hexadécyl ammonium) et on homogénéise la solution pendant 5 minutes à température ambiante. La couleur change du vert clair au jaune foncé pour passer ensuite au marron. Après homogénéisation, on ajoute 483,0 mg (2 mmol) de HDA (hexadécylamine). Le milieu réactionnel ainsi formé est chauffé à 150°C pendant 2 jours. A cette solution, 42,6 mg (0,066 mmol) de Ru$_3$(CO)$_{12}$ sont ajoutés et le milieux réactionnel est à nouveau homogénéisé sous agitation magnétique pendant 30 minutes à 90°C. Ensuite, la solution est pressurisée à température ambiante durant 10 minutes à 3 bars d'hydrogène. Elle est ensuite chauffée à 150°C pendant 24h. La poudre noire formée est récupérée par décantation magnétique et lavée 5 fois avec du toluène (5x15 ml).

Les différentes méthodes de microscopie par transmission d'électrons (TEM, HRTEM, STEM et EDX) corrélées à la diffraction de rayons X, indiquent la formation de nanoparticules de type coeur-coquille de forme sphérique, comportant un coeur de Fe(0) d'environ 10,0 nm ($\pm$ 0,9 nm), et une coquille polycristalline d'environ 0,5 nm de carbures de fer dopée avec 5% à 7% de ruthénium.

L'anisotropie des nanoparticules ainsi obtenues est estimée à environ 5,5x10$^4$ J/m$^3$ pour les particules de FeC. Le diamètre des particules, D = 11,6 nm avec un écart type 0,9 nm. La température de Curie initiale du matériau est Tc = 1043K. L'anisotropie des nanoparticules de FeC est estimée à K = 5,5 x10$^4$ J/m$^3$. N = 84.,2 et D = 11,6 nm ($\pm$ 0,9 nm).

## EXEMPLE 5 : Propriétés d'hyperthermie

La chaleur dissipée par les nanoparticules obtenues à l'exemple 4 lorsqu'elles sont placées dans un champ magnétique alternatif a été déterminée, afin de mettre en évidence leurs propriétés d'hyperthermie. Les études des propriétés d'hyperthermie (SAR = puissance dissipée) d'un système de nanoparticules ferromagnétiques peuvent être réalisées par mesure de l'augmentation de la température des nanoparticules sous l'effet d'un champ magnétique alternatif. Pour ce faire, nous avons développé un banc de mesure hyperthermie, qui fonctionne dans une gamme relativement large de champ magnétique sinusoïdal d'amplitude variable de 0-60 mT et de fréquence (2-100 kHz).

Une ampoule contenant environ 10 mg de poudre de nanoparticules obtenues à l'exemple 3, préparée sous atmosphère inerte pour éviter toute oxydation, est placée dans un calorimètre contenant 1,5 ml d'eau. La température de l'eau est mesurée en utilisant un capteur de température à fibre optique. Le temps de mesure a été choisi entre 30 s et 100 s, en fonction des paramètres expérimentaux, de sorte que l'élévation de température ne dépasse jamais 20°C. L'élévation de température à la fin de l'application du champ magnétique a été mesurée après agitation du calorimètre pour assurer l'homogénéité de la température. La puissance dissipée (SRA) par les nanoparticules est ensuite calculée, suivant la formule :

$$ SAR \ = \frac{\sum_i C_{pi} m_i}{m_{Fe}} \frac{\Delta T}{\Delta t} $$

où $C_{pi}$ et $m_i$ sont respectivement les capacités de chaleur spécifique et les masses de chaque composant ($C_p$ = 449 J.kg$^{-1}$.K$^{-1}$ pour les nanoparticules Fe, $C_p$ = 1750 J.kg$^{-1}$.K$^{-1}$ pour le mésitylène, $C_p$ = 4186 J.kg$^{-1}$.K$^{-1}$ pour l'eau et $C_p$ = 720 J.kg$^{-1}$.K$^{-1}$ pour le verre). Le dénominateur $m_{Fe}$ est la masse métallique de l'échantillon.

La valeur du SAR obtenue à 54 KHz pour les nanoparticules de Fe/FeC/Ru décrites précédemment est de 250 W.g$^{-1}$, puissance suffisante pour atteindre les températures nécessaires à la catalyse.

## EXEMPLE 6 : Activation du CO par $H_2$ par nanoparticules de Fe-FeC-Ru

Une bouteille Fischer-Porter en verre est chargée en boite à gants avec environ 10 mg de catalyseur nanoparticulaire Fe/FeC/Ru obtenu à l'exemple 4. Après avoir effectué le vide dans la bouteille, celle-ci est pressurisée à température ambiante avec 1 bar de monoxyde de carbone et 4 bars de dihydrogène, amenant la pression du système à 5 bars de gaz. La pression du système est contrôlée à l'aide d'un manomètre placé sur la tête de la bouteille Fisher-Porter. Le corps de la bouteille est ensuite placé à l'intérieur de la bobine qui génère le champ magnétique alternatif de fréquence 60 kHz et d'amplitude 56 mT (28 A) pendant une durée de 5h. La pression à l'intérieur de la bouteille atteint 2,1 bars à la fin de l'expérience, soit une perte de 3 bars. En fin de réaction, le gaz contenu dans la bouteille est analysé par spectrométrie de masse. L'analyse du spectre montre la présence d'hydrocarbures allant de C1 à C4-C5, du CO et de l'$H_2$ résiduels et la présence d'eau (Fig. 4).

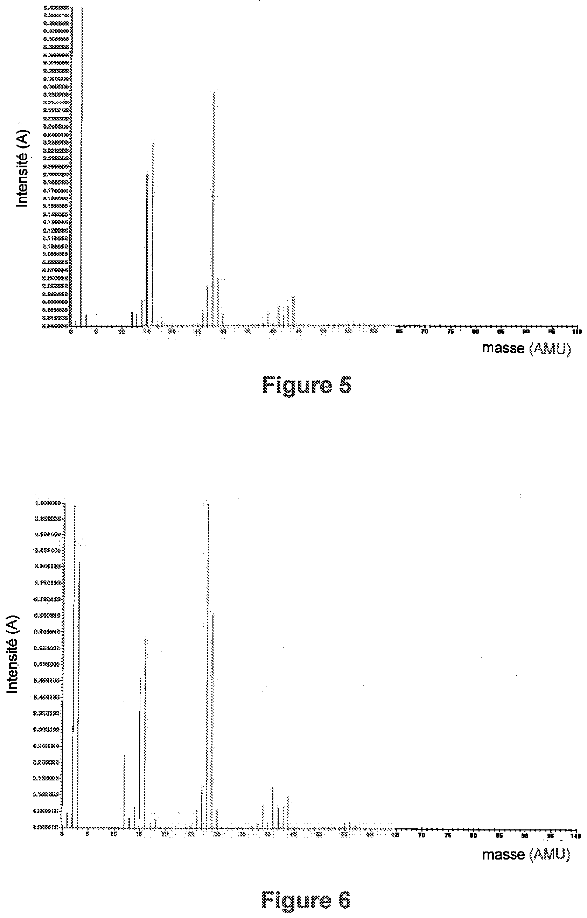

Il est intéressant à noter qu'après la première expérience, le catalyseur à été recyclé et testé à nouveau dans les mêmes conditions. Après 3 h de chauffage magnétique, on constate une perte de pression de 2 bars (par rapport à 3 bars précédemment) et la formation à nouveau d'hydrocarbures allant de C1 à C4 (Fig. 5). Le deuxième recyclage du catalyseur nous conduit à une perte de seulement 1 bar après 3 h de réaction et formation des hydrocarbures allant de C1 à C3 (Fig. 6).

On vérifie ainsi qu'après le premier cycle catalytique, les nanoparticules ferromagnétiques et catalytiques sont toujours actives. On obtient une couche de carbone, on ne tue pas le catalyseur. Le catalyseur est toujours vivant, il peut être recyclé.

**EXEMPLE 7 : Catalyse Fischer-Tropsch par nanoparticules de Fe(0)**

Une bouteille Fischer-Porter est chargée sous atmosphère d'Argon avec environ 10 mg de nanoparticules de Fe/FeC/Ru obtenues à l'exemple 4. Après avoir effectué le vide dans la bouteille, celle-ci est pressurisée à température ambiante avec une quantité équivalente de $CO_2$ et de $H_2$ amenant la pression du système à 4 bars de gaz. La pression du système est contrôlée à l'aide d'un manomètre placé sur la tête de la bouteille Fisher-Porter. Le corps de la bouteille est ensuite placé à l'intérieur d'une bobine qui génère un champ magnétique alternatif de fréquence 300 kHz et d'amplitude 80 mT pendant une durée de 4 h.

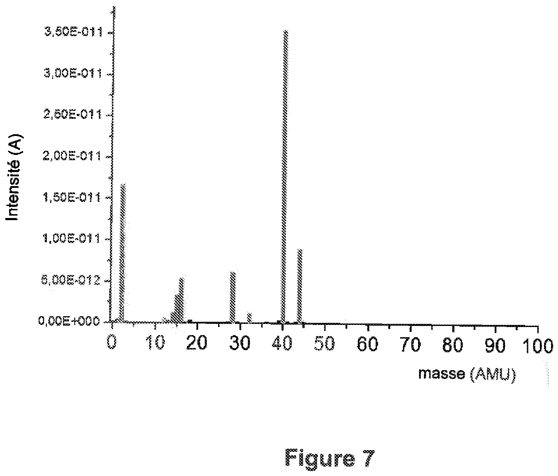

En fin de réaction, le gaz contenu dans la bouteille est analysé par spectrométrie de masse. La conversion du gaz ajouté est totale. L'analyse du spectre montre la présence de méthane ($CH_4$), de CO et d'$H_2$ résiduel, ainsi que la présence d'eau (voir Fig. 7).

**Revendications**

1. Procédé de catalyse hétérogène gaz-solide d'une réaction chimique de conversion d'un oxyde de carbone, mettant en oeuvre dans un réacteur, au moins un réactif à l'état gazeux et une composition catalytique solide apte à catalyser ladite réaction dans une plage de températures T donnée, **caractérisé en ce que**

   - ledit au moins un réactif est mis en contact avec ladite composition catalytique, laquelle comprend un composant nanoparticulaire ferromagnétique comprenant au moins un composé métallique ferromagnétique choisi parmi le fer et/ou le carbure de fer, et dont la surface est constituée au moins en partie d'un composé catalyseur de ladite réaction,
   - ledit composant nanoparticulaire est chauffé par induction magnétique pour atteindre une température comprise dans ladite plage de températures T, et
   - le ou les produits de la réaction qui se sont formés à la surface dudit composant nanoparticulaire sont récupérés.

2. Procédé selon la revendication 1, **caractérisé en ce que** ledit composant nanoparticulaire est chauffé par induction magnétique à l'aide d'un inducteur de champ externe au réacteur.

3. Procédé selon la revendication 1 ou 2, **caractérisé en ce que** le champ magnétique généré par induction a une amplitude comprise entre 1 mT et 100 mT, et une fréquence comprise entre 20 kHz et 400 kHz.

4. Procédé selon l'une des revendications précédentes, **caractérisé en ce que** ledit au moins un composé métallique ferromagnétique est aussi un catalyseur de ladite réaction.

5. Procédé selon l'une des revendications 1 à 3, **caractérisé en ce que** ledit au moins un composé métallique ferromagnétique forme noyau et est associé à un métal catalytique de ladite réaction, l'ensemble pouvant former un alliage homogène ou être ségrégé.

6. Procédé selon la revendication 5, **caractérisé en ce que** ledit métal catalytique est choisi parmi le ruthénium, le manganèse, le cobalt, le nickel, le cuivre, le zinc.

7. Procédé selon l'une des revendications 1 à 5, **caractérisé en ce que** ledit composé métallique ferromagnétique est choisi parmi ceux qui ont une anisotropie magnétique inférieure à $8.10^4$ J.m$^{-3}$.

8. Procédé selon l'une des revendications précédentes, **caractérisé en ce que** la taille dudit composant nanoparticulaire ferromagnétique est telle que son diamètre D exprimé en nanomètres est défini, par la relation :

$$D = N\sqrt{\frac{T_c}{K}}$$

où N est tel que : $80 \le N \le 200$, et $T_c$ est la température de Curie du matériau ferromagnétique dudit composant nanoparticulaire en Kelvins, et K est son anisotropie magnétique en J.m$^{-3}$.

9. Procédé selon l'une des revendications précédentes, **<u>caractérisé en ce que</u>** la taille dudit composant nanoparticulaire ferromagnétique est comprise entre 5 nm et 50 nm.

10. Procédé selon l'une des revendications précédentes, **<u>caractérisé en ce que</u>** ledit réacteur est fabriqué en des matériaux non ferromagnétiques.

11. Procédé selon l'une des revendications précédentes, **<u>caractérisé en ce que</u>** ladite réaction chimique est une réaction de synthèse d'un hydrocarbure par catalyse gaz-solide.

12. Procédé selon l'une des revendications précédentes **<u>caractérisé en ce que</u>** ladite réaction chimique est une réaction d'hydrogénation d'un oxyde de carbone à l'état gazeux, catalysée par des nanoparticules chauffées par induction magnétique.

**Patentansprüche**

1. Verfahren zur heterogenen Gas-Feststoff-Katalyse einer chemischen Reaktion zur Umwandlung eines Kohlenstoffoxids, wobei in einen Reaktor mindestens ein Reaktant im gasförmigen Zustand und eine feste katalytische Zusammensetzung, die die Reaktion in einem gegebenen Temperaturenbereich T katalysieren kann, eingesetzt werden, **dadurch gekennzeichnet, dass**

    - der mindestens eine Reaktant mit der katalytischen Zusammensetzung in Kontakt gebracht wird, die einen ferromagnetischen nanopartikulären Bestandteil umfasst, der mindestens eine ferromagnetische Metallverbindung umfasst, die aus Eisen und/oder Eisencarbid ausgewählt ist, und dessen Oberfläche zumindest zum Teil aus einer Katalysatorverbindung der Reaktion besteht,
    - der nanopartikuläre Bestandteil durch magnetische Induktion erhitzt wird, so dass er eine Temperatur in dem Temperaturenbereich T erreicht, und
    - das oder die Produkt(e) der Reaktion, das/die sich an der Oberfläche des nanopartikulären Bestandteils bildet/bilden, gewonnen wird/werden.

2. Verfahren nach Anspruch 1, **dadurch gekennzeichnet, dass** der nanopartikuläre Bestandteil durch magnetische Induktion mithilfe eines außerhalb des Reaktors befindlichen Magnetfeldinduktors erhitzt wird.

3. Verfahren nach Anspruch 1 oder 2, **dadurch gekennzeichnet, dass** das durch Induktion erzeugte Magnetfeld eine Amplitude zwischen 1 mT und 100 mT und eine Frequenz zwischen 20 kHz und 400 kHz hat.

4. Verfahren nach einem der vorhergehenden Ansprüche, **dadurch gekennzeichnet, dass** die mindestens eine ferromagnetische Metallverbindung auch ein Katalysator der Reaktion ist.

5. Verfahren nach einem der Ansprüche 1 bis 3, **dadurch gekennzeichnet, dass** die mindestens eine ferromagnetische Metallverbindung einen Kern bildet und mit einem katalytischen Metall der Reaktion assoziiert ist, wobei das Ganze eine homogene Legierung bilden oder voneinander getrennt sein kann.

6. Verfahren nach Anspruch 5, **dadurch gekennzeichnet, dass** das katalytische Metall aus Ruthenium, Mangan, Kobalt, Nickel, Kupfer, Zink ausgewählt ist.

7. Verfahren nach einem der Ansprüche 1 bis 5, **dadurch gekennzeichnet, dass** die ferromagnetische Metallverbindung aus denjenigen ausgewählt ist, die eine magnetische Anisotropie von weniger als $8.10^4$ J.m$^{-3}$ besitzen.

8. Verfahren nach einem der vorhergehenden Ansprüche, **dadurch gekennzeichnet, dass** die Größe des ferromagnetischen nanopartikulären Bestandteils derart ist, dass sein Durchmesser D, ausgedrückt in Nanometer, durch die folgende Beziehung definiert ist:

$$D = N\sqrt{\frac{T_C}{K}},$$

wobei N derart ist, dass: $80 \leq N \leq 200$, und $T_C$ die Curie-Temperatur des ferromagnetischen Materials des nanopartikulären Bestandteils in Kelvin und K seine magnetische Anisotropie in J.m$^{-3}$ ist.

9. Verfahren nach einem der vorhergehenden Ansprüche, **dadurch gekennzeichnet, dass** die Größe des ferromagnetischen nanopartikulären Bestandteils zwischen 5 nm und 50 nm beträgt.

10. Verfahren nach einem der vorhergehenden Ansprüche, **dadurch gekennzeichnet, dass** der Reaktor aus nicht-ferromagnetischen Werkstoffen hergestellt ist.

**11.** Verfahren nach einem der vorhergehenden Ansprüche, **dadurch gekennzeichnet, dass** die chemische Reaktion eine Reaktion zur Synthese eines Kohlenwasserstoffs mittels Gas-Feststoff-Katalyse ist.

**12.** Verfahren nach einem der vorhergehenden Ansprüche, **dadurch gekennzeichnet, dass** die chemische Reaktion eine Reaktion der Hydrierung eines Kohlenstoffoxids im gasförmigen Zustand ist, die durch Nanopartikel katalysiert wird, die mittels magnetischer Induktion erhitzt werden.

**Claims**

**1.** A process for the heterogeneous gas-solid catalysis of a chemical reaction of conversion of a carbon oxide, using, in a reactor, at least one reactant in the gaseous state and a solid catalytic composition capable of catalyzing said reaction in a given range of temperatures T, **characterized in that**

    - said at least one reactant is brought into contact with said catalytic composition, which comprises a ferromagnetic nanoparticulate component comprising at least a ferromagnetic metal compound chosen from iron and/or iron carbide, and the surface of which consists, at least partly, of a compound that is a catalyst for said reaction,
    - said nanoparticulate component is heated by magnetic induction in order to reach a temperature within said range of temperatures T, and
    - the reaction product(s) that are formed at the surface of said nanoparticulate component are recovered.

**2.** The process as claimed in claim 1, **characterized in that** said nanoparticulate component is heated by magnetic induction using a field inductor external to the reactor.

**3.** The process as claimed in claim 1 or 2, **characterized in that** the magnetic field generated by induction has an amplitude of between 1 mT and 100 mT, and a frequency of between 20 kHz and 400 kHz.

**4.** The process as claimed in one of the preceding claims, **characterized in that** said at least one ferromagnetic metal compound is also a catalyst for said reaction.

**5.** The process as claimed in one of claims 1 to 3, **characterized in that** said at least one ferromagnetic metal compound forms a core and is associated with a catalytic metal for said reaction, it being possible for the assembly to form a homogeneous alloy or to be segregated.

**6.** The process as claimed in claim 5, **characterized in that** said catalytic metal is chosen from ruthenium, manganese, cobalt, nickel, copper and zinc.

**7.** The process as claimed in any of claims 1 to 5, **characterized in that** said ferromagnetic metal compound is selected from those which have a magnetic anisotropy of less than $8 \times 10^4$ J.m$^{-3}$.

**8.** The process as claimed in one of the preceding claims, **characterized in that** the size of said ferromagnetic nanoparticulate component is such that its diameter D, expressed in nanometers, is defined by the relationship:

$$D = N\sqrt{\frac{T_C}{K}}$$

where N is such that: $80 \leq N \leq 200$, and $T_c$ is the Curie temperature of the ferromagnetic material of said nanoparticulate component in kelvins, and K is its magnetic anisotropy in J.m$^{-3}$.

**9.** The process as claimed in one of the preceding claims, **characterized in that** the size of said ferromagnetic nanoparticulate component is between 5 nm and 50 nm.

**10.** The process as claimed in one of the preceding claims, **characterized in that** said reactor is manufactured from non-ferromagnetic materials.

**11.** The process as claimed in one of the preceding claims, **characterized in that** said chemical reaction is a reaction for synthesizing a hydrocarbon by gas-solid catalysis.

**12.** The process as claimed in one of the preceding claims, **characterized in that** said chemical reaction is a reaction of hydrogenation of a carbon oxide in the gaseous state, catalyzed by nanoparticles heated by magnetic induction.

**Figure 1**

**Figure 2**

Figure 3

Figure 4

Figure 5

Figure 6

Figure 7

# EP 2 981 355 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description

- **KELSEN et al.** *Chemical Communications,* 2013, vol. 49, 3416
- **CEYLAN et al.** *Angewandte Chemie International Edition,* 2008, vol. 47, 8950
- **HOULDING et al.** *Green Processing and Synthesis,* 2012, 19-31
- **B. MEHDAOUI ; A. MEFFRE ; J. CARREY ; S. LACHAIZE ; L. M. LACROIX ; M. GOUGEON ; B. CHAUDRET ; M. RESPAUD.** Optimal size of nanoparticles for magnetic hyperthermia: A combined theoretical and experimental study. *Adv Funct Mat,* 2011, vol. 21, 4573
- **ANCA MEFFRE ; SÉBASTIEN LACHAIZE ; CHRISTOPHE GATEL ; MARC RESPAUD ; BRUNO CHAUDRET.** Alternative and Robust Synthesis of Monodisperse Iron(0) Nanoparticles With High Magnetization. *J Mat Chem,* 2011, vol. 21, 13464
- **ANCA MEFFRE ; BOUBKER MEHDAOUI ; VINCIANE KELSEN ; PIER FRANCESCO FAZZINI ; JULIAN CARREY ; SEBASTIEN LACHAIZE ; MARC RESPAUD ; BRUNO CHAUDRET.** A simple chemical route toward monodisperse iron carbide nanoparticles displaying tunable magnetic and unprecedented hyperthermia properties. *NanoLetters,* 2012
- **J. CARREY ; B. MEHDAOUI ; M. RESPAUD.** Simple models for dynamic hysteresis loop calculations of magnetic single-domain nanoparticles: Application to magnetic hyperthermia optimization. *J. Appl. Phys.,* 2011, vol. 109, 083921
- **B. MEHDAOUI ; A. MEFFRE ; J. CARREY ; S. LACHAIZE ; L. M. LACROIX ; M. GOUGEON ; B. CHAUDRET ; M. RESPAUD.** Optimal size of nanoparticles for magnetic hyperthermia: A combined theoretical and experimental study. *Adv. Func. Mater.,* 2011, vol. 21, 4573